(19) Europäisches Patentamt / European Patent Office / Office européen des brevets

(11) **EP 3 780 022 B1**

(12) **EUROPEAN PATENT SPECIFICATION**

(45) Date of publication and mention
of the grant of the patent:
**10.12.2025 Bulletin 2025/50**

(21) Application number: **19879380.4**

(22) Date of filing: **27.09.2019**

(51) International Patent Classification (IPC):
*H01C 7/04* (2006.01)   *C04B 35/505* (2006.01)
*H01C 7/00* (2006.01)

(52) Cooperative Patent Classification (CPC):
**C04B 35/6262; C01F 17/32; C04B 35/505;**
**C04B 35/62675; H01C 7/008; H01C 7/04;**
C01P 2006/40; C01P 2006/80; C04B 2235/3208;
C04B 2235/3213; C04B 2235/3225;
C04B 2235/3241; C04B 2235/3263;
C04B 2235/5436; C04B 2235/5445;      (Cont.)

(86) International application number:
**PCT/JP2019/038077**

(87) International publication number:
**WO 2020/090309 (07.05.2020 Gazette 2020/19)**

(54) **THERMISTOR SINTERED BODY AND TEMPERATURE SENSOR ELEMENT**

THERMISTOR-SINTERKÖRPER UND TEMPERATURSENSORELEMENT

CORPS FRITTÉ DE THERMISTOR ET ÉLÉMENT DE CAPTEUR DE TEMPÉRATURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2018 JP 2018203346**

(43) Date of publication of application:
**17.02.2021 Bulletin 2021/07**

(73) Proprietor: **Shibaura Electronics Co., Ltd.
Saitama-shi, Saitama 338-0001 (JP)**

(72) Inventors:
• **TAKEUCHI, Akitaka
Saitama-shi, Saitama 338-0001 (JP)**
• **NIIZEKI, Naohiro
Saitama-shi, Saitama 338-0001 (JP)**

(74) Representative: **Henkel & Partner mbB
Patentanwaltskanzlei, Rechtsanwaltskanzlei
Maximiliansplatz 21
80333 München (DE)**

(56) References cited:
EP-A2- 1 179 825      WO-A1-2006/109792
WO-A1-2010/038342      JP-A- 2005 294 653
JP-A- 2013 199 396      JP-A- 2016 196 392

(52) Cooperative Patent Classification (CPC): (Cont.)
C04B 2235/6567; C04B 2235/76; C04B 2235/80;
C04B 2235/9607

**Description**

Technical Field

The present invention relates to a thermistor sintered body that is used for a temperature sensor, and to a temperature sensor element.

Background Art

Conventionally, a temperature sensor has been widely used that uses a thermistor of which the electric resistance value (hereinafter simply referred to as resistance value) changes according to a temperature, as a heat sensitive body. The characteristics of the thermistor are generally shown by the resistance value and a temperature coefficient of resistance (temperature dependence of resistance value). The characteristics of the resistance value of the thermistor are different depending on a material constituting the element, and various materials have been developed which show the characteristics of the resistance value according to the purpose of use.

An average temperature coefficient of resistance (hereinafter referred to as B constant) can be obtained by the following expression;

$$B = (InRm - InRn)/(1/Tm - 1/Tn)$$

Rm: resistance value at temperature Tm Rn: resistance value at temperature Tn

The thermistor is a substance which detects a temperature on the basis of a change in the resistance value, and, when the resistance value becomes too low, cannot accurately detect the temperature. Accordingly, a thermistor which is used in a wide temperature range is required to have a small B constant.

In addition, as is disclosed in Patent Literature 1, for example, it is also required of the thermistor that a change in the resistance value due to a heat history or the like is small, in order that the thermistor detects a temperature over a wide temperature range. JP 2005 294653 A discloses a thermistor sintered body comprising a $Y_2O_3$ phase and a $Y(Cr,Mn)O_3$ phase.

Citation List

Patent Literature

Patent Literature 1: JP 2001-143907 A

Summary of Invention

Technical Problem

When a thermistor sintered body is produced, it is prerequisite that the thermistor sintered body provides desired characteristics, in particular, the B constant. One of the premises for obtaining these desired characteristics is that constituent elements of the produced thermistor sintered body match an aimed composition value. However, in an industrial production scale, it cannot be denied that a composition deviation from the aimed composition value occurs.

The present invention, therefore, is directed at providing a thermistor sintered body which stably provides the desired B constant even if the composition deviation of an additive element has occurred. In addition, the present invention is directed at providing a temperature sensor element using such a thermistor sintered body.

Solution to Problem

The invention relates to a thermistor sintered body as claimed in claim 1.

A thermistor sintered body of the present invention is configured to be a sintered body including: a $Y_2O_3$ phase and a $Y(Cr, Mn)O_3$ phase, wherein a chemical composition of Cr, Mn, Ca, Sr and Y excluding oxygen includes Cr: 3 to 12 mol%, Mn: 5 to 15 mol%, Ca: 1 to 8 mol%, and Sr: 1 to 25 mol%, with the balance being unavoidable impurities and Y.

In the thermistor sintered body of the present invention, Ca and Sr are preferably dissolved in the $Y(Cr, Mn)O_3$ phase.

In the thermistor sintered body of the present invention, Cr (mol%) / Mn (mol%) which is a ratio of Cr to Mn is preferably 1.8 to 0.25 and is more preferably 1.7 to 0.5.

In the thermistor sintered body of the present invention, Sr is preferably 4 to 10 mol%.

The present invention provides a temperature sensor element that includes: a heat sensitive body; a pair of lead wires configured to be electrically connected to the heat sensitive body; and a protective layer configured to cover the heat sensitive body. In the temperature sensor element of the present invention, the thermistor sintered body described above is used as the heat sensitive body.

Advantageous Effect of Invention

According to the present invention, a stable B constant can be obtained in a wide composition range, due to a combined addition of Ca and Sr.

Brief Description of Drawings

[FIG. 1] FIG. 1A and FIG. 1B each show a structure of a thermistor sintered body according to an embodiment of the present invention, FIG. 1A being a figure schematically showing the structure, and FIG. 1B being a table showing analysis results of chemical compositions of a $Y_2O_3$ phase and a $Y(Cr,Mn)O_3$ phase;
[FIG. 2] FIG. 2 is a flowchart showing one example of a production procedure of the thermistor sintered body according to the present embodiment;
[FIG. 3] FIG. 3A and FIG. 3B are each a perspective view showing one example of a temperature sensor element that uses the thermistor sintered body according to the present embodiment;
[FIG. 4] FIG. 4A is a perspective view showing another example of a temperature sensor element that uses the thermistor sintered body according to the present embodiment, and FIG. 4B is a figure showing the outline of the production procedure;
[FIG. 5] FIG. 5 is a table showing measurement results of a chemical composition and a B constant in Example 1;
[FIG. 6] FIG. 6A and FIG. 6B each are a graph, FIG. 6A showing a relationship between an amount of added Ca and a B constant in a thermistor sintered body to which Ca is added alone, and FIG. 6B showing a relationship between an amount of added Sr and the B constant in a thermistor sintered body to which Sr is added alone;
[FIG. 7] FIG. 7 is a graph showing a relationship between an amount of added Sr and the B constant in a thermistor sintered body to which Ca and Sr are added in combination;
[FIG. 8] FIG. 8 is a graph showing a relationship between a temperature and a B constant in Sample No. 4 to which Ca is added alone and Sample No. 19 to which Ca and Sr are combined;
[FIG. 9] FIG. 9 is a table showing measurement results of a chemical composition and a B constant of a thermistor sintered body of which the Cr (mol%) / Mn (mol%) is 1.5, in Example 2;
[FIG. 10] FIG. 10 is a graph showing a relationship between an amount of added Sr and a B constant of a thermistor sintered body of which the Cr (mol%) / Mn (mol%) is 1.5, in Example 2;
[FIG. 11] FIG. 11 is a table showing measurement results of a chemical composition and a B constant of a thermistor sintered body of which the Cr (mol%) / Mn (mol%) is 0.8, in Example 2; and
[FIG. 12] FIG. 12 is a graph showing a relationship between an amount of added Sr and a B constant of a thermistor sintered body of which the Cr (mol%) / Mn (mol%) is 0.8, in Example 2.

Description of Embodiments

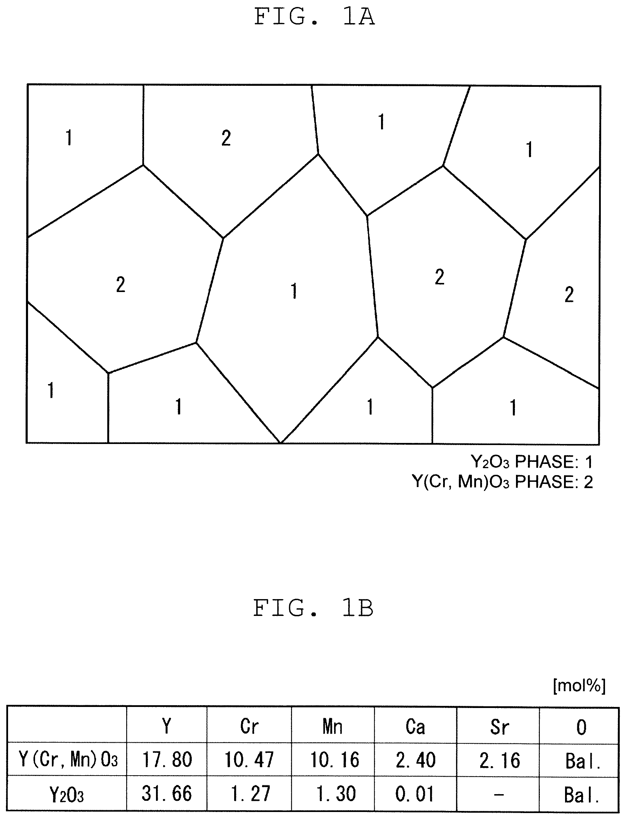

Hereinafter, embodiments of the present invention will be described with reference to the accompanying drawings.
As is shown in FIG. 1A, a thermistor sintered body according to the present embodiment is an oxide sintered body formed of a composite structure that include a $Y_2O_3$ phase and a $Y(Cr, Mn)O_3$ phase.
The $Y_2O_3$ phase has a property of an electrical insulator, and gives an influence on a resistance value of the thermistor sintered body. In addition, the $Y(Cr, Mn)O_3$ phase has a property of a semiconductor and gives an influence on a B constant of the thermistor sintered body.
The thermistor sintered body according to the present embodiment forms a sintered body structure that has the $Y_2O_3$ phase of which the resistance value and the B constant are high, and the $Y(Cr,Mn)O_3$ phase of which the resistance value and the B constant are low. In the thermistor sintered body, the $Y_2O_3$ phase constitutes more than the $Y(Cr,Mn)O_3$ phase; and the $Y_2O_3$ phase constitutes more than 50 vol% to 90 vol%, and the $Y(Cr,Mn)O_3$ phase constitutes the balance (10 vol% to less than 50 vol%).
The thermistor sintered body according to the present embodiment typically forms a sea-island structure (sea-island structure), and forms a composite structure in which the $Y(Cr,Mn)O_3$ phase forming a subphase is dispersed in the $Y_2O_3$ phase forming a main phase. In the thermistor sintered body, the $Y_2O_3$ phase preferably constitutes 60 to 90 vol% thereof, and more preferably constitutes 65 to 75 vol% thereof.

When the thermistor sintered body according to the present embodiment forms the sea-island structure, there is a case where the grain boundaries cannot be clearly identified, but the $Y_2O_3$ phase has an average grain size (d50) of approximately 0.5 to 30 $\mu$m, and the $Y(Cr,Mn)O_3$ phase has an average grain size of approximately 1.0 to 10 $\mu$m.

Each of the compositions of the $Y_2O_3$ phase and the $Y(Cr, Mn)O_3$ phase in the thermistor sintered body according to the present embodiment has been analyzed.

The results are shown in FIG. 1B, and it has been confirmed that Ca and Sr are dissolved in the $Y(Cr, Mn)O_3$ phase. Ca and Sr are dissolved in the $Y(Cr, Mn)O_3$ phase and thereby contribute to stabilization of the B constant of the $Y(Cr, Mn)O_3$ phase.

A chemical composition of Cr, Mn, Ca, Sr and Y excluding oxygen, which includes a $Y_2O_3$ phase and a $Y(Cr, Mn)O_3$ phase, includes Cr: 3 to 12 mol%, Mn: 5 to 15 mol%, Ca: 1 to 8 mol%, and Sr: 1 to 25 mol%, with the balance being unavoidable impurities and Y. The thermistor sintered body according to the present embodiment has features in that the thermistor sintered body contains Ca and Sr which have been added in combination.

In the thermistor sintered body according to the present embodiment, it is preferable that the above composition range is adopted, and in addition, Cr (mol%) / Mn (mol%) which is a ratio of Cr to Mn is 1.8 to 0.25.

A preferable range of Cr is 5 to 10 mol%, and a more preferable range of Cr is 6 to 10 mol%.

In addition, a preferable range of Mn is 6 to 12 mol%, and more preferably is 7 to 11 mol%.

It is preferable for Cr (mol%) / Mn (mol%) to be 1.7 to 0.5, is more preferable to be 1.6 to 0.6, and is further preferable to be 1.2 to 0.7.

Ca and Sr have a function of stabilizing the B constant of the thermistor sintered body by being dissolved in the $Y(Cr, Mn)O_3$ phase. A preferable range of Ca is 2 to 7 mol%, and a more preferable range of Ca is 3 to 5 mol%. In addition, a preferable range of Sr is 1 to 15 mol%, and a more preferable range of Sr is 4 to 10 mol%.

[Method for producing thermistor sintered body]

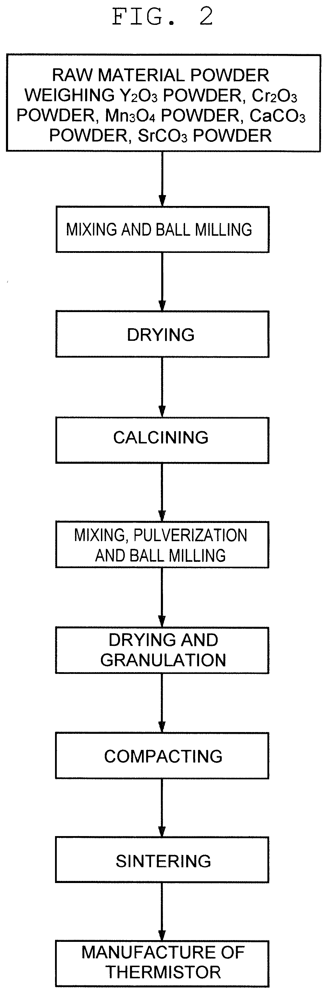

Next, one example of a method for producing a thermistor sintered body according to the present embodiment will be described with reference to FIG. 2.

As is shown in FIG. 2, the production method in the present embodiment includes steps of: weighing raw material powders; mixing the raw material powders; drying the raw material powders; calcining; mixing/pulverizing after calcining; drying/granulating; compacting; and sintering. Hereinafter, each of the steps will be sequentially described.

[Weighing of raw material powder]

In the present embodiment, the raw material powders shall be yttrium oxide ($Y_2O_3$) powder, chromium oxide ($Cr_2O_3$) powder, manganese oxide ($MnO$, $Mn_2O_3$, $Mn_3O_4$ and the like) powder, $CaCO_3$ powder and $SrCO_3$ powder.

The above raw material powders are weighed so as to form the above described chemical composition.

The $Y_2O_3$ powder contributes to the formation of a $Y_2O_3$ phase, and the $Y_2O_3$ powder, the $Cr_2O_3$ powder and the $Mn_3O_4$ powder contribute to the formation of a $Y(Cr, Mn)O_3$ phase. The $CaCO_3$ powder and the $SrCO_3$ powder function as a sintering aid, and in addition, contribute to stabilizing a B constant by being dissolved in the $Y(Cr, Mn)O_3$ phase in forms of Ca and Sr.

The raw material powder has a purity of 98% or more, preferably 99% or more, more preferably 99.9% or more, in order to obtain a thermistor sintered body having high characteristics.

The particle size of the raw material powder is not limited as long as the calcining proceeds, but can be selected in a range of 0.1 to 6.0 $\mu$m by an average particle size (d50).

[Mixing of raw material powder and ball milling]

Predetermined amounts of the $Y_2O_3$ powder, the $Cr_2O_3$ powder, the $Mn_3O_4$ powder, the $CaCO_3$ powder and the $SrCO_3$ powder are weighed, and are mixed. The mixing can be performed, for example, by a procedure of converting the mixed powder into a slurry state by addition of water, and mixing the slurry by a ball mill. For the mixture, a mixer other than a ball mill can also be used.

[Drying of raw material powder]

It is preferable to dry and granulate the slurry after the mixture, with a spray dryer or other equipment, and to form a mixed powder for calcining.

[Calcining]

The mixed powder for calcining after drying is calcined. By the calcining, a calcined body which has a composite structure of the $Y_2O_3$ phase and the $Y(Cr,Mn)O_3$ phase is obtained from the $Y_2O_3$ powder, the $Cr_2O_3$ powder, the $Mn_3O_4$ powder, the $CaCO_3$ powder and the $SrCO_3$ powder.

The calcining is performed by a procedure of, for example, charging the mixed powder for calcining into a crucible, and holding the mixed powder in a temperature range of 800 to 1300°C in the air. If the calcining temperature is lower than 800°C, the formation of the composite structure is insufficient, and if the calcining temperature exceeds 1300°C, there is a possibility that the sintering density decreases and the stability of the resistance value decreases. For this reason, the holding temperature for calcining is set in a range of 800 to 1300°C.

The holding time period in the calcining should be appropriately set according to the holding temperature, but when the holding temperature is in the above temperature range, the purpose of the calcining can be achieved by a holding time period of approximately 0.5 to 100 hours.

[Mixing, pulverization and ball milling]

The powder after calcining is mixed and pulverized. The mixture and pulverization can be performed by a procedure of converting the powder after calcining into a slurry state by addition of water, and mixing the slurry by a ball mill, in the same manner as in the procedure before calcining.

Here, the $Y(Cr, Mn)O_3$ phase and the $Y_2O_3$ phase are formed in the powder after calcining, and Ca is dissolved in the $Y(Cr, Mn)O_3$ phase. The $Y(Cr, Mn)O_3$ phase in which Ca is dissolved resists reacting with water, and accordingly, water can be used in the subsequent drying/granulating step and compacting step.

[Drying and granulation]

It is preferable to dry and granulate the powder after the pulverization, by a spray dryer or other equipment.

[Compaction]

The granulated powder after calcining is compacted into a predetermined shape.

For compacting, press compacting with the use of a die, and besides a cold isostatic press (Cold Isostatic Press: CIP) can be used.

The higher the density of the compacted body is, the higher density a sintered body easily obtains; and accordingly, it is desirable to enhance the density of the compacted body as highly as possible. For that purpose, it is preferable to use CIP with which the high density can be obtained.

[Sintering]

Next, the obtained compacted body is sintered.

The sintering is performed by a procedure of holding the temperature range of 1400 to 1650°C in the air. If the sintering temperature is lower than 1400°C, the formation of the composite structure is insufficient; and if the sintering temperature exceeds 1650°C, the sintered body melts, and/or a reaction occurs with a sintering crucible and/or the like. The holding time period in the sintering should be appropriately set according to the holding temperature, but when the holding temperature is in the above temperature range, a dense sintered body can be obtained by a holding time period of approximately 0.5 to 200 hours.

It is preferable to subject the obtained thermistor sintered body to annealing, in order to stabilize the characteristics of the thermistor. The thermistor sintered body is annealed by being held, for example, at 1000°C in the air.

[Temperature sensor element]

A specific example of a temperature sensor element 10 will be described to which the thermistor sintered body obtained in the above way is applied.

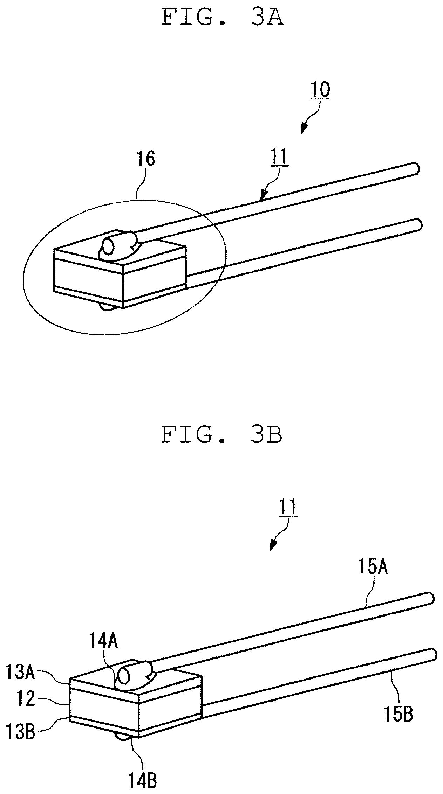

The temperature sensor element 10 includes an element body 11 and a covering layer 16, as is shown in FIG. 3A.

The element body 11 is used together with a detection circuit for extracting a change of a resistance value as a change of voltage, thereby detects a temperature of an environment in which the element body 11 is placed, and generates a temperature detection signal formed of an electrical signal.

The covering layer 16 seals the principal part of the element body 11 to keep the element body 11 in an airtight state, thereby prevents the occurrence, particularly, of chemical and physical changes of the thermistor sintered body, on the basis of the environmental conditions, and also mechanically protects the element body 11.

As is shown in FIG. 3B, the element body 11 in this example includes: a heat sensitive body 12 formed of a tabular thermistor sintered body; electrodes 13A and 13B; connection electrodes 14A and 14B; and lead wires 15A and 15B.

The electrodes 13A and 13B are each formed into a film shape on the whole area of both of top and bottom surfaces of the plate-like thermistor sintered body. The electrodes 13A and 13B are formed from platinum (Pt) or another noble metal.

The electrodes 13A and 13B are formed as a thick film or a thin film. The thick film electrodes 13A and 13B are formed by applying a paste which has been produced by mixing an organic binder with a platinum powder, onto both of the top and bottom surfaces of the thermistor sintered body, and by drying and then sintering the paste. On the other hand, the thin film electrode can be formed by vacuum vapor deposition or sputtering.

The thermistor sintered body on which the electrodes 13A and 13B have been formed is worked into a predetermined dimension.

The connection electrodes 14A and 14B are formed of metal films which are formed on the surfaces of the electrodes 13A and 13B, respectively. The connection electrodes 14A and 14B are also formed from platinum (Pt) or another noble metal.

One end sides of the lead wires 15A and 15B are electrically and mechanically connected to the electrodes 13A and 13B via the connection electrodes 14A and 14B, respectively. The other end sides of the lead wires 15A and 15B are connected to an external detection circuit. The lead wires 15A and 15B are formed of a wire material which has heat resistance and is formed from, for example, platinum or an alloy of platinum and iridium (Ir).

The lead wires 15A and 15B are connected to the electrodes 13A and 13B, in the following way.

A paste containing a platinum powder which will form the connection electrodes 14A and 14B is applied to each of one end sides of the lead wires 15A and 15B beforehand. The platinum paste is dried in a state in which the respective sides of the lead wires 15A and 15B, on which the platinum paste has been applied, are brought into contact with the electrodes 13A and 13B, and then the platinum powder is sintered.

For the covering layer 16 shown in FIG. 3A, a glass can be used which contains, for one example, $SiO_2$, CaO, SrO, BaO, $Al_2O_3$ and $SnO_2$ as the raw materials. By such glass, the element body 11 and the one end sides of the lead wires 15A and 15B are sealed.

A method for sealing the heat sensitive body 12 and the like by the covering layer 16 can be arbitrarily selected; but it is possible to seal the thermistor sintered body and the like by covering the thermistor sintered body and the like with, for example, a glass tube which is made from glass and becomes the covering layer 16, and then by melting the glass tube.

It is preferable that the temperature sensor element 10 is subjected to annealing treatment, after having been sealed by glass and cooled. Due to this annealing treatment, it becomes possible to prevent the resistance of the element body 11 from decreasing.

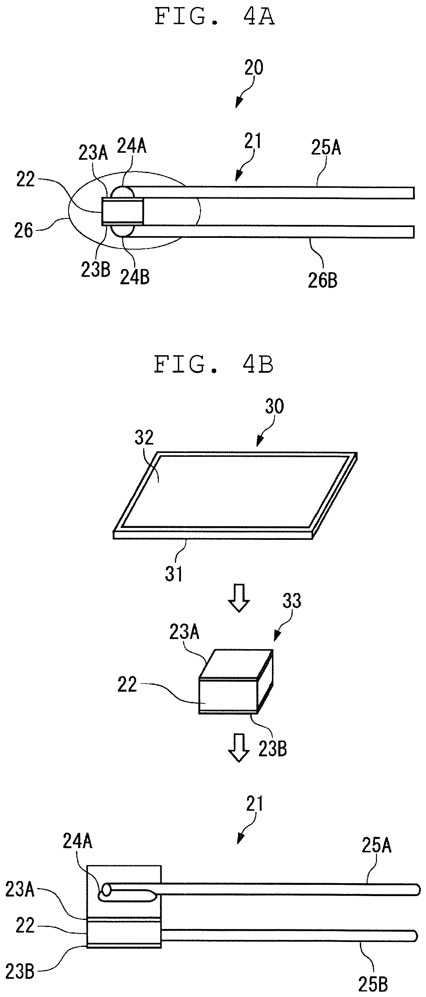

Next, another embodiment of the temperature sensor element 20 will be described with reference to FIG. 4.

The temperature sensor element 20 includes an element body 21 and a covering layer 26, and is similar in appearance to the temperature sensor element 10, as is shown in FIG. 4A. The element body 21 and the covering layer 26 have the same functions as the element body 11 and the covering layer 16 of the temperature sensor element 10, respectively.

As is shown in FIG. 4A, the element body 21 in this example includes: a tabular thermistor sintered body; electrodes 23A and 23B; connection electrodes 24A and 24B; and lead wires 25A and 25B.

The element body 21 has features in portions of the thermistor sintered body and the electrodes 23A and 23B, as compared with the element body 11. As is shown in the middle stage of FIG. 4B, in the element body 21, the thermistor sintered body and the electrodes 23A and 23B constitute a thermistor chip 33. The thermistor chip 33 is manufactured in the following way.

Into the previously described pulverized calcined powder, for example, an ethyl cellulose-based binder is mixed, and the mixture is compacted into a sheet shape. The conditions of the calcining are as previously described.

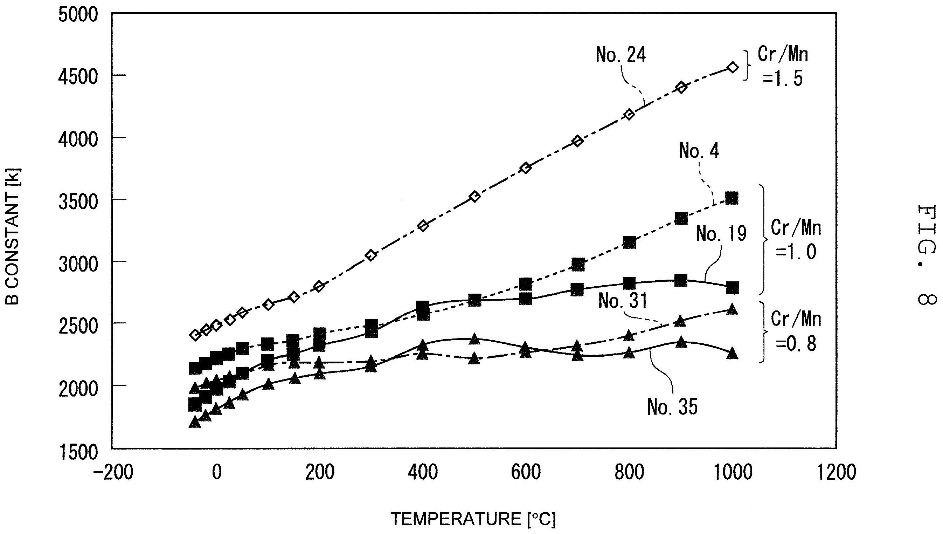

Next, a predetermined dimension of the sheet is punched from the compacted sheet, and is sintered. The conditions of the sintering are as previously described. Then, a wafer obtained by sintering is polished, and a wafer 31 is obtained which is formed of a thermistor sintered body with a predetermined thickness, as is shown in the middle stage of FIG. 4B. After that, a paste for forming an electrode is applied to both of the top and bottom surfaces of the polished wafer 31 (thermistor sintered body) by printing, and then sintered; and a wafer 30 is obtained on which electrode films have been formed. An electro-conductive material to be contained in the paste is selected from platinum (Pt) and other noble metals. When the platinum has been selected, the sintering is performed at approximately 1300°C. After that, the wafer 30 is cut so as to become a predetermined dimension, as is shown in the middle stage of FIG. 8B, and thereby the thermistor chip 33 is obtained which has the film-like electrodes 23A and 23B formed on the top and bottom surfaces, respectively.

Next, the lead wires 25A and 25B are joined on to the electrodes 23A and 23B on both of the top and bottom surfaces of the thermistor sintered body, respectively, with the use of a Pt paste, then the resultant thermistor sintered body is subjected to baking treatment to have the connection electrodes 24A and 24B formed thereon, and the element body 21 shown in the lower stage of FIG. 4B is manufactured.

Next, the covering layer 26 is formed; and for the covering layer 26, the previously described glass can be used, or a covering material can also be used which is formed of a constituent material similar to the thermistor sintered body.

For this covering material, a composite oxide disclosed in Patent Literature 2 can be used, which is a sintered material of a powder that has been obtained by calcining $Y_2O_3$, $Cr_2O_3$ and $Mn_3O_4$, and a $B_2O_3$ powder. In other words, the covering layer of the thermistor sintered body in the present invention can be arbitrarily selected as long as the purpose can be achieved.

[Example 1]

Next, the thermistor sintered body of the present invention will be described on the basis of Examples.

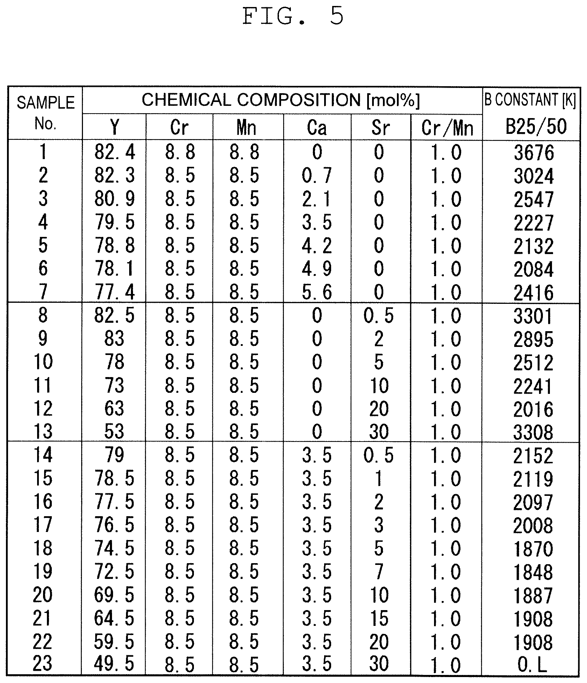

Raw material powders having the following average particle sizes were prepared, and thermistor sintered bodies having various compositions shown in FIG. 5 were produced according to the above described production steps. In this table, No. 1 is a sample, which does not contain Ca and Sr; Nos. 2 to 7 are samples containing Ca but not containing Sr; and Nos. 8 to 13 are samples containing Sr but not containing Ca. In addition, Nos. 14 to 23 are samples containing Ca and Sr. Samples to be produced were calcined under conditions of 1000°C for 24 hours, and then were sintered under condition of 1500°C for 24 hours, both in the air.

$Y_2O_3$ powder: 0.1 $\mu$m $Cr_2O_3$ powder: 2.0 $\mu$m $Mn_3O_4$ powder: 5.0 $\mu$m

$CaCO_3$ powder: 2.0 $\mu$m $SrCO_3$ powder: 2.0 $\mu$m

The B constant was determined for each of the obtained sintered bodies. The results are shown in FIGS. 5, 6A, 6B and 7. Note that the B constant shows values between 25°C and 50°C (B25/50).

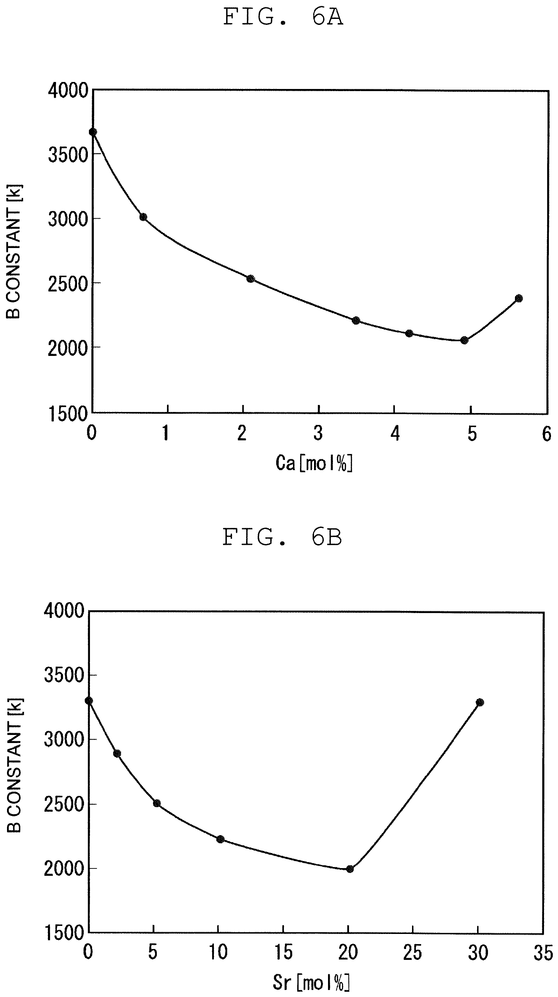

As is shown in FIG. 6A, when Ca is added alone, the B constant has a minimum value in the vicinity of 5 mol%. In addition, as is shown in FIG. 6B, also when Sr is added alone, the B constant has a minimum value in the vicinity of 20 mol%. In this way, the material having the minimum value in the characteristic (B constant) becomes incapable of providing the desired characteristic if the composition deviates from the target, and accordingly it is necessary to strictly control the conditions of the production process.

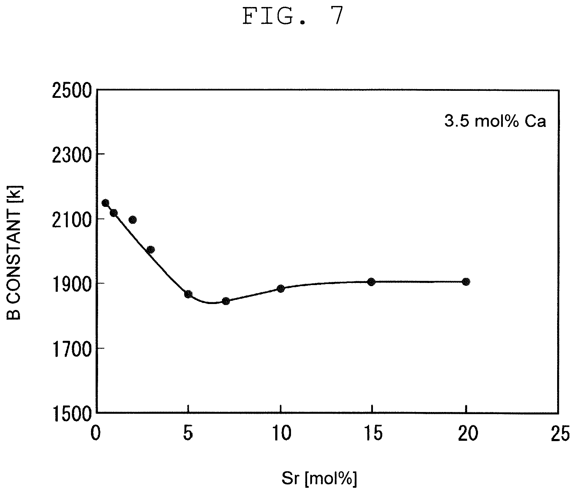

On the other hand, as is shown in FIG. 7, when Ca and Sr are added in combination, the B constant becomes stable in a range in which Sr is 5 to 25 mol%. Accordingly, even if the composition deviation has occurred, the desired characteristic can be easily obtained, as long as in the range.

Here, in the present embodiment, in addition to the $Y_2O_3$ phase and the $Y(Cr, Mn)O_3$ phase, the $SrCrO_3$ phase and the $SrMnO_3$ phase are generated as a third phase, in some cases. The $SrCrO_3$ phase is formed in a portion in which synthesis has been insufficient during calcining, and the $SrMnO_3$ phase is formed in a composition which contains a large amount of Sr. Among the third phases, the $SrCrO_3$ phase reacts with water and is eluted. This elution becomes a factor of the composition deviation, but according to the present invention, even if the composition deviation has occurred, the desired characteristic can be easily obtained.

Next, the B constants of a plurality of temperature regions were determined by an operation of measuring resistance values in a range of -40°C to 1050°C, about several samples in FIG. 5. The B constant is based on the following expression.

$$B(m/n) = (lnRm - lnRn)/(1/Tm - 1/Tn)$$

Rm: resistance value at Tm°C Rn: resistance value at Tn°C

The results are shown in FIG. 8.

When the thermistor sintered body (Sample No. 19) to which Ca and Sr are added in combination is compared with the thermistor sintered body (Sample No. 4) to which Ca is added alone, the results are as follows.

It can be said that the B constants of the thermistor sintered body to which Ca and Sr are added in combination and the thermistor sintered body to which Ca is added alone are approximately the same, in a medium temperature region of approximately 400°C to 600°C. However, in a low temperature region lower than the medium temperature region and a high temperature region higher than the medium temperature region, the B constant of the thermistor sintered body is lower to which Ca and Sr are added in combination. In other words, the thermistor sintered body to which Ca and Sr are added in combination has an effect of lowering the B constant in the low temperature region and the high temperature region, and is effective for applications which require adjustment of an electrical resistance value in the temperature regions.

[Example 2]

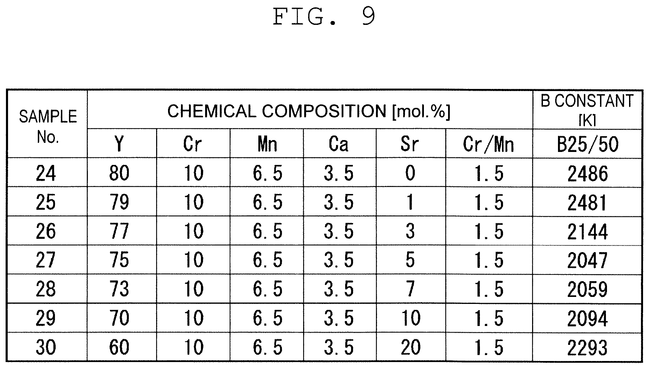

Next, thermistor sintered bodies having various compositions shown in FIG. 9 were produced. The thermistor sintered bodies shown in FIG. 9 are different from those in Example 1 in that Cr (mol%) / Mn (mol%) is 1.5. The used raw material powders and the production steps are the same as those in Example 1.

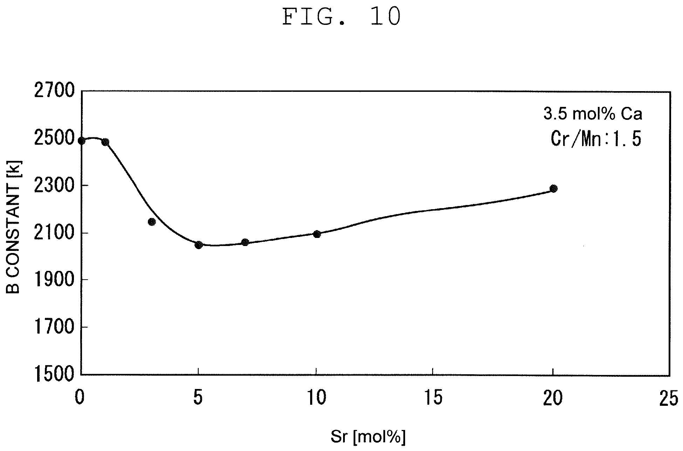

The B constants of the respective obtained sintered bodies were determined in the same manner as in Example 1. The results are shown in FIG. 10, and when Ca and Sr are added in combination, the B constant becomes stable in a range in which Sr is 3 to 10 mol%, and particularly in a range of 5 to 7%.

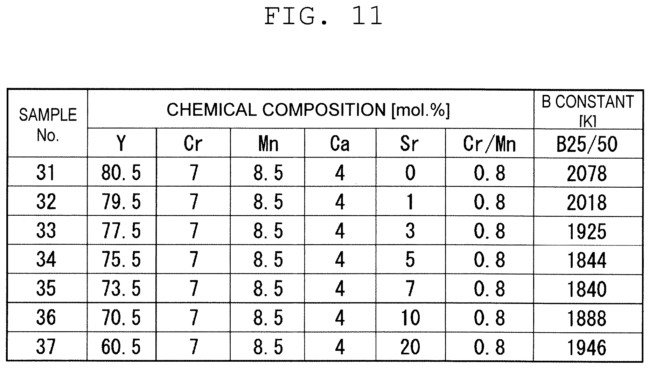

Next, thermistor sintered bodies having various compositions shown in FIG. 11 were produced. The thermistor sintered bodies shown in FIG. 11 are different from those in Example 1 in that the content of Ca is 4 mol% and Cr (mol%) / Mn (mol%) is 0.8. The used raw material powders and the production steps are the same as those in Example 1.

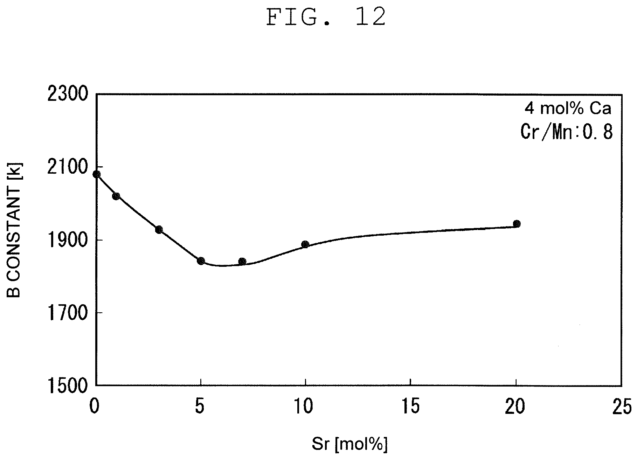

The B constants of the respective obtained sintered bodies were determined in the same manner as in Example 1. The results are shown in FIG. 12, and when Ca and Sr are added in combination, the B constant becomes stable in a range in which Sr is 3 to 10 mol%, and particularly in a range of 5 to 7%.

In consideration of the results of the B constant in Example 2 described above, it is understood that the B constant becomes stable not only when Cr (mol%) / Mn (mol%) is 1.0, but also when Ca and Sr are added in combination.

Next, in the same manner as in Example 1, the B constants of a plurality of temperature regions were determined by an operation of measuring resistance values in a range of -40°C to 1050°C, about several samples in FIG. 9 and FIG. 11. The results are shown in the above described FIG. 8.

According to FIG. 8, when Cr (mol%) / Mn (mol%) becomes large, in other words, when Cr becomes rich with respect to Mn, the B constant tends to become large. In addition, according to the comparison between Sample No. 31 and Sample No. 35, even when Cr (mol%) / Mn (mol%) is 0.8, in other words, even when Mn becomes rich with respect to Cr, the B constant becomes low when Ca and Sr are added in combination, in the low temperature region lower than the medium temperature region and the high temperature region higher than the medium temperature region, similarly to a case where Cr (mol%) / Mn (mol%) is 1.0.

The present invention has been described above on the basis of the preferred embodiments and Examples, but the configurations included in the above described embodiments can be selected, or be appropriately changed to other configurations, insofar as they do not deviate from the scope of the invention.

The thermistor sintered body and the thermistor of the present invention can be used over a wide temperature range from -50°C to approximately 1200°C, and accordingly can be widely used as a temperature sensor for automotive exhaust-gas treatment devices, and for the temperature measurement of a high temperature in a water heater, a boiler, a microwave oven, a stove and the like.

In addition, it is preferable that the thermistor sintered body of the present invention is formed of only a crystal structure of the orthorhombic crystal system, but it is not excluded that a crystal structure of the hexagonal crystal system exists. As long as the characteristics of the present invention can be obtained, even when a trace amount of the crystal structure of the hexagonal crystal system is included in the crystal structure of the orthorhombic crystal system, the thermistor sintered body corresponds to the thermistor sintered body of the present invention.

In addition, the present invention includes the $Y_2O_3$ phase and the $Y(Cr, Mn)O_3$ phase, but allows the existence of another phase (third phase). The above described $SrCrO_3$ and $SrMnO_3$ are listed as the third phase, and the thermistor sintered body of the present invention can enjoy an effect that the B constant becomes stable, even if having contained these third phases.

Reference Signs List

    1 $Y_2O_3$ phase
    2 $Y(Cr,Mn)O_3$ phase
    10 and 20 temperature sensor element
    11 and 21 element body
    13A, 13B, 23A and 23B electrode
    14A, 14B, 24A and 24B connection electrode
    15A, 15B, 25A and 25B lead wire
    16 and 26 covering layer
    31 wafer
    33 thermistor chip

**Claims**

1.  A thermistor sintered body comprising:

a $Y_2O_3$ phase (1) as a main phase; and
a Y(Cr,Mn)$O_3$ phase (2) as a subphase,
**characterized in that** the thermistor sintered body has a chemical composition which, excluding oxygen, comprises 3 to 12 mol% of Cr, 5 to 15 mol% of Mn, 1 to 8 mol% of Ca, 1 to 25 mol% of Sr, and a balance of Y and unavoidable impurities.

2. The thermistor sintered body according to claim 1, wherein Ca and Sr are dissolved in the Y(Cr,Mn)$O_3$ phase (2).

3. The thermistor sintered body according to claim 1 or 2, wherein Cr (mol%) / Mn (mol%) which is a ratio of Cr to Mn is 1.8 to 0.25.

4. The thermistor sintered body according to claim 1 or 2, wherein Cr (mol%) / Mn (mol%) which is a ratio of Cr to Mn is 1.7 to 0.5.

5. The thermistor sintered body according to any one of claims 1 to 4, comprising 2 to 7 mol% of Ca and 4 to 10 mol% of Sr.

6. A temperature sensor element (10, 20) comprising:

    a heat sensitive body (12, 22);
    a pair of lead wires (15A, 15B, 25A, 25B) configured to be electrically connected to the heat sensitive body (12, 22); and
    a protective layer (16, 26) configured to cover the heat sensitive body (12, 22),
    wherein the heat sensitive body (12, 22) is the thermistor sintered body according to any one of claims 1 to 5.

**Patentansprüche**

1. Ein Thermistor-Sinterkörper, umfassend:

    eine Y203-Phase (1) als eine Hauptphase; und
    eine Y(Cr,Mn)$O_3$-Phase (2) als eine Subphase,
    **dadurch gekennzeichnet, dass** der Thermistor-Sinterkörper eine chemische Zusammensetzung aufweist, die, mit Ausnahme von Sauerstoff, 3 bis 12 Mol-% Cr, 5 bis 15 Mol-% Mn, 1 bis 8 Mol-% Ca, 1 bis 25 Mol-% Sr und einen Rest aus Y und unvermeidbaren Verunreinigungen umfasst.

2. Der Thermistor-Sinterkörper nach Anspruch 1, wobei Ca und Sr in der Y(Cr,Mn)$O_3$-Phase (2) gelöst sind.

3. Der Thermistor-Sinterkörper nach Anspruch 1 oder 2, wobei Cr (Mol-%) / Mn (Mol-%), was ein Verhältnis von Cr zu Mn ist, 1,8 bis 0,25 beträgt.

4. Der Thermistor-Sinterkörper nach Anspruch 1 oder 2, wobei Cr (Mol-%) / Mn (Mol-%), was ein Verhältnis von Cr zu Mn ist, 1,7 bis 0,5 beträgt.

5. Der Thermistor-Sinterkörper nach einem der Ansprüche 1 bis 4, umfassend 2 bis 7 Mol-% Ca und 4 bis 10 Mol-% Sr.

6. Ein Temperatursensorelement (10, 20), umfassend:

    einen wärmeempfindlichen Körper (12, 22);
    ein Paar von Zuleitungsdrähten (15A, 15B, 25A, 25B), die konfiguriert sind, um mit dem wärmeempfindlichen Körper (12, 22) elektrisch verbunden zu werden; und
    eine Schutzschicht (16, 26), die konfiguriert ist, um den wärmeempfindlichen Körper (12, 22) zu bedecken,
    wobei der wärmeempfindliche Körper (12, 22) der Thermistor-Sinterkörper nach einem der Ansprüche 1 bis 5 ist.

**Revendications**

1. Un corps fritté de thermistance comprenant :

une phase Y203 (1) en tant que phase principale ; et
une phase Y(Cr,Mn)O$_3$ (2) en tant que sous-phase,
**caractérisé en ce que** le corps fritté de thermistance a une composition chimique qui, à l'exclusion de l'oxygène, comprend de 3 à 12 % en moles de Cr, de 5 à 15 % en moles de Mn, de 1 à 8 % en moles de Ca, de 1 à 25 % en moles de Sr, et un reste de Y et d'impuretés inévitables.

2. Le corps fritté de thermistance selon la revendication 1, dans lequel le Ca et le Sr sont dissous dans la phase Y(Cr,Mn)O$_3$ (2).

3. Le corps fritté de thermistance selon la revendication 1 ou 2, dans lequel Cr (% en moles) / Mn (% en moles), qui est un rapport de Cr sur Mn, est de 1,8 à 0,25.

4. Le corps fritté de thermistance selon la revendication 1 ou 2, dans lequel Cr (% en moles) / Mn (% en moles), qui est un rapport de Cr sur Mn, est de 1,7 à 0,5.

5. Le corps fritté de thermistance selon l'une quelconque des revendications 1 à 4, comprenant de 2 à 7 % en moles de Ca et de 4 à 10 % en moles de Sr.

6. Un élément de capteur de température (10, 20) comprenant:
   un corps thermosensible (12, 22) ;

   une paire de fils de connexion (15A, 15B, 25A, 25B) configurés pour être connectés électriquement au corps thermosensible (12, 22) ; et
   une couche protectrice (16, 26) configurée pour recouvrir le corps thermosensible (12, 22),
   dans lequel le corps thermosensible (12, 22) est le corps fritté de thermistance selon l'une quelconque des revendications 1 à 5.

FIG. 1A

Y$_2$O$_3$ PHASE: 1
Y(Cr, Mn)O$_3$ PHASE: 2

FIG. 1B

[mol%]

|  | Y | Cr | Mn | Ca | Sr | O |
|---|---|---|---|---|---|---|
| Y(Cr, Mn)O$_3$ | 17.80 | 10.47 | 10.16 | 2.40 | 2.16 | Bal. |
| Y$_2$O$_3$ | 31.66 | 1.27 | 1.30 | 0.01 | – | Bal. |

# FIG. 2

RAW MATERIAL POWDER
WEIGHING $Y_2O_3$ POWDER, $Cr_2O_3$
POWDER, $Mn_3O_4$ POWDER, $CaCO_3$
POWDER, $SrCO_3$ POWDER

↓

MIXING AND BALL MILLING

↓

DRYING

↓

CALCINING

↓

MIXING, PULVERIZATION
AND BALL MILLING

↓

DRYING AND
GRANULATION

↓

COMPACTING

↓

SINTERING

↓

MANUFACTURE OF
THERMISTOR

FIG. 3A

FIG. 3B

# FIG. 4A

# FIG. 4B

# FIG. 5

| SAMPLE No. | CHEMICAL COMPOSITION [mol%] | | | | | | B CONSTANT [K] |
|---|---|---|---|---|---|---|---|
| | Y | Cr | Mn | Ca | Sr | Cr/Mn | B25/50 |
| 1 | 82.4 | 8.8 | 8.8 | 0 | 0 | 1.0 | 3676 |
| 2 | 82.3 | 8.5 | 8.5 | 0.7 | 0 | 1.0 | 3024 |
| 3 | 80.9 | 8.5 | 8.5 | 2.1 | 0 | 1.0 | 2547 |
| 4 | 79.5 | 8.5 | 8.5 | 3.5 | 0 | 1.0 | 2227 |
| 5 | 78.8 | 8.5 | 8.5 | 4.2 | 0 | 1.0 | 2132 |
| 6 | 78.1 | 8.5 | 8.5 | 4.9 | 0 | 1.0 | 2084 |
| 7 | 77.4 | 8.5 | 8.5 | 5.6 | 0 | 1.0 | 2416 |
| 8 | 82.5 | 8.5 | 8.5 | 0 | 0.5 | 1.0 | 3301 |
| 9 | 83 | 8.5 | 8.5 | 0 | 2 | 1.0 | 2895 |
| 10 | 78 | 8.5 | 8.5 | 0 | 5 | 1.0 | 2512 |
| 11 | 73 | 8.5 | 8.5 | 0 | 10 | 1.0 | 2241 |
| 12 | 63 | 8.5 | 8.5 | 0 | 20 | 1.0 | 2016 |
| 13 | 53 | 8.5 | 8.5 | 0 | 30 | 1.0 | 3308 |
| 14 | 79 | 8.5 | 8.5 | 3.5 | 0.5 | 1.0 | 2152 |
| 15 | 78.5 | 8.5 | 8.5 | 3.5 | 1 | 1.0 | 2119 |
| 16 | 77.5 | 8.5 | 8.5 | 3.5 | 2 | 1.0 | 2097 |
| 17 | 76.5 | 8.5 | 8.5 | 3.5 | 3 | 1.0 | 2008 |
| 18 | 74.5 | 8.5 | 8.5 | 3.5 | 5 | 1.0 | 1870 |
| 19 | 72.5 | 8.5 | 8.5 | 3.5 | 7 | 1.0 | 1848 |
| 20 | 69.5 | 8.5 | 8.5 | 3.5 | 10 | 1.0 | 1887 |
| 21 | 64.5 | 8.5 | 8.5 | 3.5 | 15 | 1.0 | 1908 |
| 22 | 59.5 | 8.5 | 8.5 | 3.5 | 20 | 1.0 | 1908 |
| 23 | 49.5 | 8.5 | 8.5 | 3.5 | 30 | 1.0 | 0.L |

FIG. 6A

FIG. 6B

FIG. 7

# FIG. 8

FIG. 9

| SAMPLE No. | CHEMICAL COMPOSITION [mol.%] | | | | | | B CONSTANT [K] |
|---|---|---|---|---|---|---|---|
| | Y | Cr | Mn | Ca | Sr | Cr/Mn | B25/50 |
| 24 | 80 | 10 | 6.5 | 3.5 | 0 | 1.5 | 2486 |
| 25 | 79 | 10 | 6.5 | 3.5 | 1 | 1.5 | 2481 |
| 26 | 77 | 10 | 6.5 | 3.5 | 3 | 1.5 | 2144 |
| 27 | 75 | 10 | 6.5 | 3.5 | 5 | 1.5 | 2047 |
| 28 | 73 | 10 | 6.5 | 3.5 | 7 | 1.5 | 2059 |
| 29 | 70 | 10 | 6.5 | 3.5 | 10 | 1.5 | 2094 |
| 30 | 60 | 10 | 6.5 | 3.5 | 20 | 1.5 | 2293 |

FIG. 10

FIG. 11

| SAMPLE No. | CHEMICAL COMPOSITION [mol.%] | | | | | | B CONSTANT [K] |
|---|---|---|---|---|---|---|---|
| | Y | Cr | Mn | Ca | Sr | Cr/Mn | B25/50 |
| 31 | 80.5 | 7 | 8.5 | 4 | 0 | 0.8 | 2078 |
| 32 | 79.5 | 7 | 8.5 | 4 | 1 | 0.8 | 2018 |
| 33 | 77.5 | 7 | 8.5 | 4 | 3 | 0.8 | 1925 |
| 34 | 75.5 | 7 | 8.5 | 4 | 5 | 0.8 | 1844 |
| 35 | 73.5 | 7 | 8.5 | 4 | 7 | 0.8 | 1840 |
| 36 | 70.5 | 7 | 8.5 | 4 | 10 | 0.8 | 1888 |
| 37 | 60.5 | 7 | 8.5 | 4 | 20 | 0.8 | 1946 |

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005294653 A
- JP 2001143907 A